Europäisches Patentamt

European Patent Office

Office européen des brevets

(11) Publication number: **0 169 027**
**B1**

## EUROPEAN PATENT SPECIFICATION

(45) Date of publication of patent specification: **21.09.88**

(51) Int. Cl.⁴: **B 01 J 29/38**

(21) Application number: **85304933.6**

(22) Date of filing: **10.07.85**

(54) **Method for reclaiming a heat-damaged zeolite catalyst.**

(30) Priority: **16.07.84 US 631352**

(43) Date of publication of application:
**22.01.86 Bulletin 86/04**

(45) Publication of the grant of the patent:
**21.09.88 Bulletin 88/38**

(84) Designated Contracting States:
**BE DE FR GB IT NL SE**

(56) References cited:
**EP-A-0 034 444**
**GB-A-1 127 250**
**US-A-4 324 696**

(73) Proprietor: **MOBIL OIL CORPORATION**
**150 East 42nd Street**
**New York New York 10017 (US)**

(72) Inventor: **Chang, Clarence Dayton**
**11 Murray Place**
**Princeton New Jersey 08540 (US)**
Inventor: **Miale, Joseph Nicolas**
**25 Merritt Drive**
**Lawrenceville New Jersey 08648 (US)**

(74) Representative: **Cooper, John Anthony et al**
**Mobil Court 3 Clements Inn**
**London WC2A 2EB (GB)**

Courier Press, Leamington Spa, England.

## Description

This invention relates to a method for reclaiming a heat-damaged zeolite catalyst.

In particular, the invention is concerned with reclaiming heat damaged catalysts comprising zeolites of the ZSM-5 type. ZSM-5 type zeolites are members of a class of zeolites that exhibit unusual properties. Although these zeolites have unusually low alumina contents, i.e. high silica to alumina ratios of at least 12, they are very active even when the silica to alumina ratio exceeds 30. The activity is surprising since catalytic activity is generally attributed to framework aluminum atoms and/or cations associated with these aluminum atoms. These zeolites, after activation, acquire an intracrystalline sorption capacity for normal hexane which is greater than that for water, i.e. they exhibit "hydrophobic" properties.

An important characteristic of the crystal structure of this class of zeolites is that it provides constrained access to and egress from the intracrystalline free space for cegtain organic molecules by virtrue of having an effective pore size intermediate between the small pore Linde A and the large pore Linde X, i.e. the pore windows of the structure have about a size such as would be provided by 10-membered rings of oxygen atoms. It is to be understood, of course, that these rings are those formed by the regular disposition of the tetrahedra making up the anionic framework of the crystalline aluminosilicate, the oxygen atoms themselves being bonded to the silicon or aluminum atoms at the centers of the tetrahedra.

The ZSM-5 type zeolites have an effective pore size such as to freely sorb normal hexane, while providing constrained access to larger molecules. It is sometimes possible to judge from a known crystal structure whether such constrained access exists. For example, if the only pore windows in a crystal are formed by 8-membered rings of oxygen atoms, then access to molecules of larger cross-section than normal hexane is excluded and the zeolite is not of the ZSM-5 type. Windows of 10-membered rings are preferred, although in some instances excessive puckering of the rings or pore blockage may render these zeolites ineffective. 12-membered rings usually do not offer sufficient constraint to produce the advantageous conversions, although the puckered 12-ring structure of TMA offretite shows constrained access. Other 12-ring structures may exist which, due to pore blockage or to other cause, may be operative.

Rather than attempt to judge from crystal structure wheteher or not a zeolite possesses the necessary constrained access to molecules larger than normal paraffins, a simple determination of the "Constraint Index", or C.I., may be made as described in, for example U.S. Patent No. 4,016,218. Suitable zeolites for use in the present method are found to have a Constraint Index of 1 to 12.

The ZSM-5 type zeolites preferably also have a crystal framework density, in the dry hydrogen form, of not less than about 1.6 grams per cubic centimeter. The dry density for known crystal structures may be calculated from the number of silicon plus aluminum atoms per 1000 cubic Angstroms, as given, e.g., on Page 19 of the article on Zeolite Structure by W. M. Meier in "Proceedings of the Conference on Molecular Sieves, London, April 1967", published by the Society of Chemical Industry, London, 1968. When the crystal structure is unknown, the crystal framework density may be determined by classical pycnometer techniques. For example, it may be determined by immersing the dry hydrogen form of the zeolite in an organic solvent not sorbed by the crystal. Alternatively, the crystal density may be determined by mercury porosimetry, since mercury will fill the interstices between crystal but will not penetrate the intracrystalline free space.

The class of zeolites defined herein is exemplified by ZSM-5, ZSM-11, ZSM-12, ZSM-23, ZSM-35, ZSM-38, and ZSM 48. ZSM-5 is described in U.S. Patent 3,702,886. ZSM-11 is more particularly described in U.S. Patent 3,709,979. ZSM-12 is more particularly described in U.S. Patent 3,832,449. ZSM-23 is more particularly described in U.S. Patent 4,076,842. ZSM-35 is more particularly described in U.S. Patent 4,016,245. ZSM-38 is more particularly described in U.S. Patent 4,046,859. ZSM-48 is more particularly described in EP—B—15132.

It is known that the ZSM-5 type catalysts, in general, are more resistant to deactivation induced by the accumulation of coke than the large pore zeolites such as zeolite X, Y, and mordenite. Moreover, it is known that ZSM-5 type catalysts deactivated by the accumulation of coke may be regenerated by burning off the coke at high temperature in an oxygen-containing gas. It is also known that ZSM-5 type catalysts are relatively resistant to permanent damage form exposure to high temperature in the presence of steam, which conditions prevail when a coked catalyst is regenerated by burning off the coke. In spite of these advantageous properties, deactivation due to coke deposition is noted after sufficient time on stream, thereby necessitating regeneration of the catalyst. Such regeneration, if not carefully conducted, or if repeated a sufficient number of times, can lead to catalyst damage, i.e. a loss of catalytic activity which is not recovered by the usual regeneration. Exposure of ZSM-5 type catalyst to high temperature in the presence of product steam, such as is encountered in the conversion of methanol to gasoline, also leads to catalyst damage after a sufficient period of time. Operations involved in catalyst manufacture such as burning off the organic template, or conversion of the ammonium to the hydrogen form by calcination, if not carefully controlled, also may lead to catalyst damage. Furthermore, a number of applications, such as that described in U.S. Patent 4,283,584, require that the catalyst be steamed to reduce its catalytic activity to a prescribed value. Accidental oversteaming of the catalyst, i.e. steaming for too long a time or at too high a temperature, also produces a catalyst which may be regarded as damaged.

There is therefore a need for a simple and reliable method for reclaiming ZSM-5 type catalysts that have become damaged either in the course of manufacture or during use.

U.S. Patent 3,493,490 describes a method for reactivating damaged cracking catalysts made with large pore zeolites. In this method, the damaged catalyst is treated with an anionic reagent selected from the group consisting of liquid water at a temperature above 212°F (100°C) or a solution containing a hydroxyl ion from a non-alkali-metal compound. U.S. 3,533,959 to Miale et al. describes a method for reclaiming damaged large pore zeolite cracking catalysts by treatment with a chelating agent at a pH between 7 and 9.

U.S. Patent 4,324,696 describes a method for preparing a superactive HZSM-5 catalyst by treatment with steam at elevated temperature followed by base exchange of the resultant steamed product with an ammonium salt. However, the method described is not applicable to a damaged catalyst.

The term "deactivated" is used herein in a generic sense to refer to loss of activity for any reason, such as the accumulation of coke or catalyst poisons, or alteration of the crystal in some fashion. In general, deactivation due to coke and poisons is reversible by regeneration with air or hydrogen, whereas deactivation due to alteration of the crystal is not reversed by regeneration. The term "damaged" as used herein is specifically reserved for deactivation resulting from crystal alteration.

It has now been found that when a ZSM-5 type catalyst that has irreversibly lost a significant fraction of its acidic catalytic activity is treated under the conditions more fully described below with a liquid aqueous medium and when the treated catalyst is base exchanged at elevated temperature with ammonium ion followed by calcination, then the catalyst which is recovered will have a restored activity that is larger than that produced by either the hydrothermal treatment alone or by the base exchange and calcination steps in the absence of the hydrothermal treatment.

Accordingly the invention resides in a method for reclaiming a catalyst that because of heat damage has lost at least 10% of its activity for cracking normal hexane, said catalyst comprising a zeolite having a silica-to-alumina molar ratio of at least 12 and a constraint index of 1 to 12, and said damaged catalyst being further chracterized by a measurable increase in hexane cracking activity when base exhanged at about 80°C with an ammonium salt followed by conversion to the hydrogen form, said method comprising:

contacting said heat-damaged catalyst with liquid water at a temperature of 80 to 370°C for 1 to 100 hours, so as to produce said measureable increase in hexane cracking activity by at least about 5 alpha units; and

converting said contacted catalyst to the ammonium form by ion exchange with an ammonium salt at a temperature of 50 to 100°C.

This invention is applicable to the treatment of ZSM-5 type zeolite crystals regardless whether or not the crystals are incorporated in a matrix or binder. Where a matrix or binder is used, suitable materials include synthetic or naturally occurring substances as well as inorganic materials such as clay, silica and/or metal oxides. The latter may be either naturally occurring or in the form of gelatinous precipitates or gels including mixtures of silica and metal oxides. Naturally occurring clays which can be composited with the zeolite include those of the montmorillonite and kaolin families, which families include the sub-bentonites and the kaolins commonly known as Dixie, McNamee-Georgia and Florida clays or others in which the main mineral constituent is halloysite, kaolinite, dickite, nacrite or anauxite. Such clays can be used in the raw state as originally mined or initially subjected to calcination, acid treatment or chemical modification.

In addition to the foregoing materials, the zeolites employed herein may be composited with a porous matrix material, such as alumina, silica-alumina and silica-magnesia. The matrix may be in the form of a cogel. The relative proportions of zeolites component and inorganic oxide gel matrix on an anhydrous basis may vary widely with the zeolite content ranging from between 5 to 99 percent by weight and more usually in the range of about 10 to 80 percent by weight of the dry composite.

The term "acid catalytic activity" as used herein refers to effectiveness of the zeolite, when in suitable form, for catalyzing reactions known to be promoted by so-called acid catalysts. Catalytic cracking, hydrocracking, skelatal isomerization, catalytic dewaxing, and various aromatic hydrocarbon reactions such as alkylation, dealkylation, isomerization and disproportionation, are hydrocabron conversion reactions which fall in the category of acid catalyzed reactions. Other reactions, such as alcohol dehydration, are also in this class.

As is known in the art, the acid catalytic activity of a zeolite may be measured by its "alpha value", which is the ratio of the rate constant of a test sample for cracking normal hexane to the rate constant of a standard reference catalyst. Thus, an alpha value=1 means that the test sample and the reference standard have about the same activity. The alpha test is described in U.S. Patent 3,354,078 and in The Journal of Catalysis, Vol. IV, pp. 522—529 (August 1965). Measurement of the "alpha value" is useful to assess the extent of catalyst damage before treatment, and also the degree of restoration achieved with any sample treated by the method of this invention.

The present method is applicable to restore acid activity to a heat-damaged ZSM-5 type catalyst whether that damage is incurred during manufacture, or during use of the zeolite catalyst in a conversion reaction such as one of those above enumerated. It is applicable to catalysts which have suffered only a relatively small amount of damage, that is a loss of only 10% of their catalytic activity, and to more severely damaged catalysts, as evidenced by a substantially larger loss such as 50% or more of their catalytic activity. No special preparation of the damaged catalyst is contemplated prior to restoration by the present method unless organic · residues are present such as coke, in which case it is desirable to remove the same prior to proceeding.

The reclamation precedure of the present method is very simple. The damaged catalyst is contacted with a liquid water at a temperature of 80 to 370°C, preferably 150 to 200°C, for about 1 to 100 hours. The amount of water is not precisely critical, but enough must be supplied to at least fill the pores of the catalyst. As a practical matter, reclamation proceeds best when the catalyst is immersed in water. The precise time and temperature required for an effective reclamation will depend on a number of factors but in general it is contemplated to employ a time and temperature effective to provide an increase in hexane cracking activity of at least 5 alpha units measured on a sample of the treated material which has been converted to the ammonium form by ion exchange at an elevated temperature of about 80°C and calcined to produce the hydrogen form, compared with a similarly exchanged converted sample of the damaged catalyst in the absence of said treatment with water.

It is of course important to provide treatment conditions that avoid loss of liquid water at temperatures above its boiling point. For treatment at the boiling point, reflux is adequate. Above about 100°C, treatment is preferably effected in a closed vessel under autogenous pressure to avoid loss of liquid water.

After treatment with water, the catalyst is converted to the ammonium form by base exchange with an ammonium salt at elevated temperature of 50°C to 100°C preferably at about 80°C. The restored catalyst may be calcined to convert it to the hydrogen from prior to use.

This invention will now be illustrated by examples.

Example 1
A sample of ZSM-5 ($SiO_2/Al_2O_3$=70, alpha=about 200) was heated in air in a muffle furnace to 800°C and calcined for one hour at 800°C. Its hexane cracking activity (alpha) was measured (alpha=80). A 22-gram aliquot of this product was heated to 1000°C in air and calcined for one hour at 1000°C. An aliquot of the thermally deactivated catalyst was tested for hexane cracking activity and the alpha value was found to be 0.4.

Example 2
A 0.5 g aliquot of the product of Example 1 was ammonium exchanged overnight by contacting with 40 ml 1N $NH_4NO_3$ at ambient temperature. It was washed and re-exchanged with 40 ml 1N $NH_4NO_3$ at 80°C for two hours. It was then washed and dried at 130°C for one hour. The resultant catalyst was air calcined at 538°C for 30 minutes prior to checking its hexane cracking activity. The alpha value was found to be 1.

Example 3
A 1-gram aliquot of the product of Example 1 was subjected to mild steaming (100% steam at 450°C) for 20 hours. It was then calcined in air for 30 minutes at 538°C and tested for hexane cracking activity, giving an alpha value of 0.5.

Example 4
A 0.5 g aliquot of the product of Example 3 was ammonium exchanged as in Example 2 (40 ml 1N $NH_4NO_3$ at 80°C) and then washed, dried and calcined for 30 minutes at 538°C again as in Example 2. The alpha value of the product was 1.1.

Example 5
A 1-gram aliquot of the product of Example 1 was placed in a 15 ml test tube and covered with about 5 ml water. A glass wool plug was inserted to prevent losses by possible "bumping" and the test tube was put into a 300 ml autoclave containing adequate water to satisfy autogenous pressure requirements. The autoclave was heated to 154°C at a pressure of 618 kPa (75 psig) and retained under these conditions for 60 hours. The autoclave was then cooled and the test tube contents dried and tested for hexane cracking activity. The alpha value was 1.7.

Example 6
A 0.5 g aliquot of the product of Example 5 was exchanged with 40 ml 1N $NH_4NO_3$ (as in Example 2) washed, dried and tested for hexane cracking activity. The alpha value was found to have increased to 6.6.

Example 7  ·
A 2.58 g aliquot of the product of Example 1 was heated to 482°C in nitrogen at 6996 kPa (1000 psig) while dimethyl ether as pumped over the catalyst for five hours at 6 ml liquid DME per hour. This conversion yielded water as a product which served to hydrothermally treat the catalyst. The conversion was repeated at atmospheric pressure for 4.25 hours at 482°C and four hours at 371°C. The used catalyst was tested for hexane cracking acitivity the alpha value being 1.3.

Example 8
The product of Example 7 was regenerated in air for five hours at 538°C in a muffle furnace to remove carbonaceous materials. It was exchanged with 80 ml 1N $NH_4NO_3$ for one hour, washed and re-exchanged with fresh 1N $NH_4NO_3$ overnight. The catalyst was washed, re-exchanged with 1N $NH_4NO_3$ at 80°C, washed and dried for one hour at 130°C. An aliquot was tested for hexane cracking activity and found to have an alpha value of 1.9.

Example 9
A 20-g sample of HSM-5 was steamed for 20 hours at 566°C (100% flowing steam). An aliquot of the steam deactivated catalyst was tested for hexane cracking activity and found to have an alpha value of 6.3.

Example 10
A 0.4 g aliquot of the product of Example 9 was exchanged with 40 ml 1N $NH_4NO_3$ at 80°C for two hours. The sample was washed, dried for one hour at 130°C, then tested for hexane cracking activity. The alpha value has increased to 104.

Example 11
A 1 g aliquot of the product of Example 9 was placed in a 15 ml test tube covered with water and hydrothermally treated simultaneously with Example 5. The alpha value of the resultant product had only increased to 7.6.

Example 12
A 0.5 g aliquot of the product of Example 11 was treated exactly as Example 6 and now the alpha value had increased to 120.

Example 13
An 11.7 gram sample of HZSM-5 extrudate (65% zeolite/35% alumina with the alpha value of the zeolite being about 200) was calcined for 20 minutes in steam. An aliquot of the steam deactivated catalyst was tested for hexane cracking activity and was found to have an alpha value of 14.

Example 14
A 1 g aliquot of the product of Example 13 was exchanged with 40 ml 1N $NH_4NO_3$ overnight. It was washed, dried at 130°C, calcined 30 minutes at 538°C. The catalyst was re-exchanged with fresh $NH_4NO_3$, dried at 130°C, calcined for one hour at 538°C and tested for hexane cracking activity. The alpha value had increased to 33.

Example 15
A 0.7 g aliquot of the product of Example 14 was placed in a 15 ml test tube, covered with about 5 ml water. It was treated in exactly the same manner as the catalysts of Examples 5 and 11. An aliquot was tested for hexane cracking activity and was found to have an alpha value of 30.

Example 16
A 0.35 g aliquot of the product from Example 15 was exchanged with 40 ml of 1N $NH_4NO_3$ for 16 hours. It was filtered, washed and re-exchanged with 1N $NH_4NO_3$ for two hours at 80°C and tested for hexane cracking activity. The alpha value had increased to 56.

It will be appreciated that Examples 5, 7, 11 and 15 shown the effect of activation by hydrothermal treatment alone, whereas Examples 6, 8, 12 and 16 show the additional improvement obtained when hydrothermal treatment is followed by ammonium salt exchange.

**Claims**

1. A method for reclaiming a catalyst that because of heat damage has lost at least 10% of its activity for cracking normal hexane, said catalyst comprising a zeolite having a silica-to-alumina ratio of at least 12 and a constraint Index of 1 to 12, and said damaged catalyst being further characterized by a measureable increase in hexane cracking activity when base exchanged at about 80°C with an ammonium salt followed by conversion to the hydrogen form, said method comprising:
contacting said heat-damaged catalyst with liquid water at a temperature of 80 to 370°C for 1 to 100 hours, and
converting said contacted catalyst to the ammonium form by ion exchange with an ammonium salt at a temperature of 50 to 100°C.

2. A method as claimed Claim 1 wherein said contacting temperature is between 150 and 200°C.

3. A method as claimed in Claim 1 or Claim 2 wherein said zeolite is ZSM-5, ZSM-11, ZSM-12, ZSM-23, ZSM-35, ZSM-38 or ZSM-48.

4. A method as claimed in Claim 1 or Claim 2 wherein said zeolite is ZSM-5.

5. A method as claimed in any preceding claim wherein said heat-damaged catalyst includes an alumina binder.

**Patentansprüche**

1. Verfahren zur Rüchgewinnung eines Katalysators, der durch thermische Schädigung zumindest 10% seiner Aktivität zum Cracken von n-Hexan verloren hat, wobei dieser Katalysator einen Zeolith mit einem Siliciumdioxid/Aluminiumoxid-Verhältnis von mindestens 12 und einem Zwangsindex von 1 bis 12 umfaßt, und dieser geschädigte Katalysator darüberhinaus durch eine meßbare Erhöhung der Crackaktivität für Hexan gekennzeichnet ist, wenn er bei etwa 80°C einem Basenaustausch mit einem Ammoniumsalz unterzogen wurde, gefolgt von Umwandlung in die Wasserstofform, wobei dieses Verfahren umfaßt:
Kontakt dieses thermisch geschädigten Katalysators mit flüssigem Wasser bei einer Temperatur von 80 bis 370°C 1 bis 100 Stunden lang und
Umwandlung dieses in Kontakt gebrachten Katalysators durch Ionenaustausch mit einem Ammoniumsalz bei einer Temperatur von 50 bis 100°C in die Ammoniumform.

2. Verfahren nach Anspruch 1, worin die Kontakttemperatur zwischen 150 und 200°C liegt.

3. Verfahren nach Anspruch 1 oder 2, worin der Zeolith ZSM-5, ZSM-11, ZSM-12, ZSM-23, ZSM-35, ZSM-38 oder ZSM-48 ist.

4. Verfahren nach Anspruch 1 oder 2, worin der Zeolith ZSM-5 ist.

**5.** Verhahren nach einem der vorstehenden Ansprüche, worin der thermisch geschädigte Katalysator ein Aluminiumoxidbindemittel umfaßt.

## Revendications

**1.** Un procédé de récupération d'un catalyseur qui, par endommagement par la chaleur, a perdu au moins 10% de son activité de craquage vis-à-vis de l'hexane normal, ce catalyseur comprenant une zéolite, dont le rapport silice/alumine est au moins égal à 12 et l'indice de contrainte est compris entre 1 et 12, et ce catalyseur endommagé étant en outre caractérisé par une augmentation mesureable de son activité de craquage vis-à-vis de l'hexane, lorsqu'on l'échange par une base, à environ 80°C avec un sel d'ammonium, traitement que l'on fait suivre d'une conversion en sa forme protonée, ce procédé consistant à:

—mettre ce catalyseur endommagé par la chaleur, au contact d'eau liquide, à une température de 80 à 370°C pendant une durée de 1 à 100 heures, et

—convertir ce catalyseur ainsi mis en contact en sa forme ammoniée, par échange ionique avec un sel d'ammonium à une température de 50 à 100°C;

**2.** Un procédé selon la revendication 1, dans lequel cette température de mise en contact est comprise entre 150 et 200°C;

**3.** Un procédé selon l'une des revendications 1 ou 2, dans lequel cette zéolite est la ZSM-5, ZSM-11, ZSM-12, ZSM-23, ZSM-35, ZSM-38 ou la ZSM-48;

**4.** Un procédé selon la revendication 1 ou 2, dans lequel cette zéolite est la ZSM-5;

**5.** Un procédé selon l'une quelconque des revendications précédentes, dans lequel ce catalyseur endommagé par la chaleur, comprend un liant à base d'alumine.